# EUROPÄISCHE PATENTSCHRIFT

(11) **EP 3 453 545 B1**
(45) Veröffentlichungstag und Bekanntmachung des Hinweises auf die Patenterteilung: **21.10.2020**
(21) Anmeldenummer: 18191817.8
(22) Anmeldetag: 30.08.2018
(51) Int. Cl.: B60H 1/34, F24F 13/14

(54) **LUFTAUSSTRÖMER FÜR FAHRZEUGINNENRÄUME**
AIR VENT FOR VEHICLE INTERIORS
DIFFUSEUR D'AIR POUR HABITACLES DE VÉHICULES

(30) Priorität: 01.09.2017 DE 102017120208
(43) Veröffentlichungstag der Anmeldung: 13.03.2019
(73) Patentinhaber: GRAMMER Interior Components GmbH, 74736 Hardheim (DE)
(72) Erfinder: Ko, Wanhyun, 06114 Halle (Saale) (DE); Schreck, Christian, 97953 Königheim (DE)
(74) Vertreter: Ostriga Sonnet Wirths & Vorwerk

(56) Entgegenhaltungen:
- DE-A1-102012 015 519
- DE-U1-202004 015 522
- US-A- 3 648 590

## Beschreibung

Die Erfindung betrifft einen Luftausströmer für Fahrzeuginnenräume mit einer Leitlamelle und mit Folgelamellen, die um jeweils eine Achse schwenkbar sind, wobei Folgelamellen der Leitlamelle in ihrer Öffnungsbewegung folgen und unterschiedliche Winkel zur Leitlamelle einnehmen können, um eine diffuse Luftströmung zu erzeugen, mit einem Öffnungsbereich, welcher von einer Anzahl von Lam ellen mit zwischenliegenden Ausströmspalten definiert ist, wobei durch die Ausströmspalten Luft in das Fahrzeuginnere gelangt und mit mindestens einem Bedienelement, mittels dessen die Lamellen in ihrer Ausrichtung veränderbar sind und eine beliebige Lamelle als Leitlamelle wählbar ist, der die Folgelamellen in ihrer Öffnungsbewegung folgen.

Luftausströmer für Fahrzeuginnenräume sind im Stand der Technik hinlänglich bekannt. Sie finden Verwendung beispielsweise in Landfahrzeugen, Flugzeugen sowie Wasserfahrzeugen und in einer Reihe weiterer Anwendungsgebiete.

Aus dem Stand der Technik sind Luftausströmer für Fahrzeuge, insbesondere PKW bekannt, wie sie beispielsweise in DE 20 2014 103 672 U1 beschrieben sind. Ein einen Öffnungsquerschnitt umschließendes Gehäuse ist mit vertikal nebeneinander sowie horizontal übereinander angeordneten Lamellen versehen. Jede Lamelle ist um eine Achse schwenkbar angeordnet. Die Horizontallamellen sind miteinander bewegungsgekoppelt, wie auch die Vertikallamellen miteinander bewegungsgekoppelt sind. Wenigstens ein Bedienelement dient dazu, die Vertikal- bzw. Horizontallamellen zu verschwenken, so dass die durch zwischen den Lamellen angeordneten Ausströmspalten ausströmende Luft in ihrer Strömungsrichtung beeinflussbar ist.

Die einen solchen Luftausströmer verlassende Luft ist in der Regel gerichtet, so dass sich im Ausströmbereich befindende Personen einen mehr oder weniger starken Luftzug verspüren können.

US 3,648,590 B zeigt eine Luftleitvorrichtung für einen Luftausströmer. Bei diesem sind die Luftleitlamellen in zwei Gruppen unterteilt. Die Lamellengruppen können zueinander unterschiedliche Winkel einnehmen. Zudem ist offenbart, dass die Einzellamellen innerhalb der Gruppen zueinander variierende Winkel einnehmen können. Die Lamellen einer Lamellengruppe sind untereinander durch ein Stellglied verbunden, welches die Lamellen einer Gruppe zueinander ausrichtet.

DE 10 2012 015 519 A1 zeigt einen Luftausströmer mit Luftleitlamellen, die zueinander eine definierte Ausrichtung einnehmen. Die Lamellen sind untereinander gekoppelt und ausschließlich synchron verstellbar. Bei einer Verstellung der Lamellen bleibt die definierte Ausrichtung zueinander im Wesentlichen bestehen.

DE 20 2004 015 522 U1 zeigt einen Luftausströmer, welcher eine vorgelagerte und eine nachgelagerte Lamellengruppe aufweist. Die nachgelagerte Lamellengruppe verfügt über untereinander bewegungsgekoppelte Einzellamellen unterschiedlicher Form. Hierdurch wird eine Spreizung des Luftstromes erzeugt.

Dem Problem des Luftzuges durch gerichtete Luftströmungen hat sich die DE 20 2016 103 388 U1 angenommen. Dort ist ein Luftausströmer offenbart, welcher in seinem Ausführungsbeispiel lediglich über vertikal gerichtete Lamellen verfügt. Diese sind miteinander bewegungsgekoppelt und nehmen gemäß der Grundfunktion des Luftausströmers beim Verschwenken durch das Bedienelement eine zueinander parallele Schwenkstellung ein. In dieser Veröffentlichung ist jedoch auch offenbart, dass die Lamellen mittels einer zweiten Bedieneinrichtung verschwenkt werden können. Diese zweite Bedieneinrichtung ist als Formgedächtnisdraht ausgeführt und bewegt die seitlich einer zentralen Lamelle gelegenen Lamellen. Diese seitlichen Lamellen nehmen mit zunehmendem Abstand von der zentralen Lamelle mit dieser einen zunehmend größeren Winkel ein. Hierdurch wird ein diffuser Luftstrom geformt. Die mittlere Lamelle der ausströmerseitigen Anordnung bildet hier also eine Leitlamelle, zu welcher jede Lamelle der benachbarten, sogenannten Folgelamellen einen abweichenden Winkel einnimmt. Auf dieser Weise wird mit zunehmender nachbarschaftlicher Entfernung der zwischen Leitlamelle und Folgelamelle eingeschlossene Winkel größer. Der in der DE 20 2016 103 388 U1 dargestellte Luftausströmer ist somit in der Lage, statt einer gerichteten eine diffuse Luftströmung zu erzeugen, so dass Zuglufterscheinungen zumindest vermindert, idealerweise vollständig unterbunden werden.

Diese vorteilhafte Eigenschaft geht jedoch damit einher, dass die gerichtete wie auch die diffuse Luftströmung einen festgelegten Ursprung hat, der dem Strömungszentrum entspricht.

Aufgabe der Erfindung ist es, einen Luftausströmer; für Fahrzeuginnenräume zu schaffen, welcher einen variablen Strömungsursprung bei einem gerichteten und/oder diffusen Luftstrom bereitstellt.

Gelöst wird die Aufgabe der Erfindung von einem Luftausströmer für Fahrzeuginnenräume mit den Merkmalen des Anspruchs 1, insbesondere mit dessen kennzeichnenden Merkmalen, wonach die Ausrichtung der beidseitig zur Leitlamelle benachbart angeordneten Folgelamellen entgegengesetzt ist, wobei mit zunehmend entfernter Nachbarschaft ein größerer Winkel zwischen der Leitlamelle und jeweiliger Folgelamelle eingeschlossen ist, bis benachbarte Folgelamellen aneinander anliegen, aneinander anliegende Folgelamellen einen ausströmspaltfreien Schließbereich definieren.

Bei einer durch einen gattungsgemäßen Luftausströmer gebildeten, diffusen Luftströmung bildet die in der Regel zentral angeordnete Leitlamelle das Strömungszentrum. Bei einem, eine gerichtete Luftströmung erzeugenden Luftausströmer gilt die mittlere Lamelle als Leitlamelle, welche ebenfalls das Strömungszentrum markiert und somit als Leitlamelle zu gelten hat. Durch die freie Wahl der Leitlamelle lässt sich die Lage des Zentrums der Luftströmung, gleich ob gerichtet oder diffus, verändern, was zu einem erhöhten Belüftungskomfort beiträgt.

Da die Ausrichtung der beidseitig zur Leitlamelle benachbart angeordneten Folgelamellen entgegengesetzt ist, wobei mit zunehmend entfernter Nachbarschaft ein größerer Winkel zwischen der Leitlamelle und jeweiliger Folgelamelle eingeschlossen ist, bis benachbarte Folgelamellen aneinander anliegen. Die entgegengesetzte Ausrichtung der Folgelamellen ist insbesondere dann gegeben, wenn die Leitlamelle quer zur Längserstreckung des Luftausströmers gerichtet ist.

Dabei ist es aus dem Stand der Technik prinzipiell bekannt, dass die beidseitig zur Leitlamelle benachbart angeordneten Folgelamellen entgegengesetzt ausgerichtet sind, so dass der besondere Vorteil darin zu sehen ist, dass beidseitig der Leitlamelle durch aneinander anliegende Folgelamellen ein geschlossener, ausströmfreier Bereich im Luftausströmer definiert ist. Insoweit definieren aneinander anliegende Folgelamellen einen ausströmspaltfreien Schließbereich des Luftausströmers.

Ein solcher Luftausströmer erstreckt sich demnach über eine gewisse Breite bei vertikaler Lamellenanordnung oder Höhe bei horizontaler Lamellenanordnung und erlaubt es, durch Wahl der Leitlamelle einen spezifischen Ausströmbereich zu definieren, wohingegen seitlich dieses Ausströmbereiches das Austreten eines gerichteten und/oder diffusen Luftstroms verhindert wird. Auf diese Weise kann die Luftströmung beispielsweise auf einen ersten Benutzer gerichtet sein, ohne einen zweiten Benutzer gleichzeitig zu beinträchtigen.

Vorgesehen ist, dass mittels des mindestens einen Bedienelementes der Öffnungsbereich über die Breite des Luftausströmers verschiebbar ist, wobei der Öffnungsbereich bei gleichbleibender Lamellenzahl einen entsprechenden Lamellenaustausch erfährt.

Der Vorteil eines Luftausströmers gemäß diesem Ausführungsbeispiel ist darin zu sehen, dass der Öffnungsbereich sich quasi stufenlos über die Breite des Luftausströmers verschieben lässt. Hierdurch lässt sich das Zentrum des Luftstroms zu beinahe jedem beliebigen Punkt im Raum hin richten, so dass eine erhebliche Komfortwirkung erreicht wird. Da durch das Verschieben des Öffnungsbereiches lediglich ein Lamellenaustausch stattfindet, die den Öffnungsbereich definierende Lamellenanzahl jedoch konstant bleibt, verändert sich lediglich die Position des Luftstromzentrums, der Luftstrom verändert sich jedoch in seiner durch den Öffnungsbereich definierten Ausformung nicht.

Es ist daran gedacht, dass mehrere Lamellen als Leitlamelle wählbar sind. Hierdurch wird erreicht, dass über die räumliche Ausdehnung des Luftausströmers hinweg - entweder vertikal und/oder horizontal - mehrere Öffnungsbereiche definiert werden, so dass zwei oder mehr unabhängig voneinander in ihrer Position und Ausrichtung beeinflussbare Luftströmungen den Luftausströmer verlassen können. Es ist also möglich, jeden dieser Öffnungsbereiche mittels des mindestens einen Bedienelementes zu verschieben, wobei zwischen den Öffnungsbereichen durchaus ausströmspaltfreie Schließbereiche vorhanden sein können. Vorgesehen ist weiterhin, dass die gewählten Leitlamellen nebeneinander angeordnet sind und zwei benachbarte Leitlamellen lediglich von einem Ausströmspalt beabstandet sind, wobei insbesondere vorgesehen ist, dass nebeneinander angeordnete Leitlamellen ein Leitlamellenbündel bilden, wobei die Lamellen des Leitlamellenbündels zueinander parallel ausgerichtet sind. Die Folge hiervon wird in der Regel sein, dass das Leitlamellenbündel einen Ausströmbereich innerhalb des Öffnungsbereiches definiert, aus welchem die Luft gerichtet in den Innenraum strömt.

Der wesentliche Vorteil dieser Ausführungsform ist darin zu sehen, dass der Öffnungsbereich durch das Anordnen mehrerer Leitlamellen nebeneinander in seiner Größe bzw. Erstreckung über die Luftausströmerausdehnung variierbar ist. Der Öffnungsbereich kann somit vergrößert werden, wobei beidseitig des so definierten Leitlamellenbündels die Folgelamellen mit zunehmend entferner Nachbarschaft mit dem Leitlamellenbündel einen zunehmend größeren Winkel einschließen, bis benachbarte Folgelamellen aneinander anliegen und einen Schließbereich definieren.

Auf diese Weise lassen sich auch bei vergrößertem Öffnungsbereich mittels des Schließbereiches Teile des Luftausströmers ausströmfrei gestalten, so dass Personen oder Fahrzeugbereiche durch den Luftstrom unbeeinflusst bleiben.

Vorgesehen ist auch bei dieser Ausführungsform, dass mittels des mindestens einen Bedienelementes der Öffnungsbereich über die Breite des Luftausströmers verschiebbar ist, wobei das Leitlamellenbündel bei gleichbleibender Lamellenzahl einen entsprechenden Leitlamellenaustausch erfährt.

Somit wird auch bei vergrößertem Öffnungsbereich gewährleistet, dass dieser quasi stufenlos über die räumliche Ausdehnung des Luftausströmers verschiebbar ist.

Vorgesehen ist letztlich, dass sich das mindestens eine Bedienelement über die Breite des Luftausströmers erstreckt, insbesondere wenn das mindestens eine Bedienelement eine berührungssensitive Fläche ist.

Auf diese Weise ist ein einheitliches Bedienelement bereitgestellt, welches sich optisch sehr gut in beispielsweise das Armaturenbrett eines PKWs einfügen lässt. Zudem ist eine einheitliche Bedienung des Luftausströmers gewährleistet.

Weitere Vorteile der Erfindung sowie eine besseres Verständnis derselben folgen aus der Beschreibung eines Ausführungsbeispiels. Es zeigen:
- Fig. 1:: eine Lamellenanordnung eines erfindungsgemäßen Luftausströmers in einer ersten Geschlossenstellung in Ansicht von vorn,
- Fig. 2:: die Lamellenanordnung gemäß Fig. 1 in Aufsicht,
- Fig. 3:: eine alternative Lamellenanordnung zur Realisierung einer Geschlossenstellung des Luftausströmers gemäß Fig. 1;
- Fig. 4:: eine Aufsicht auf die Lamellenanordnung gemäß Fig. 3,
- Fig. 5:: der Luftausströmer gemäß Fig. 1 mit einem durch Anwahl einer Leitlamelle definierten Öffnungsbereich in Ansicht von vorne,
- Fig. 6:: die Lamellenanordnung gemäß Fig. 5 in Aufsicht,

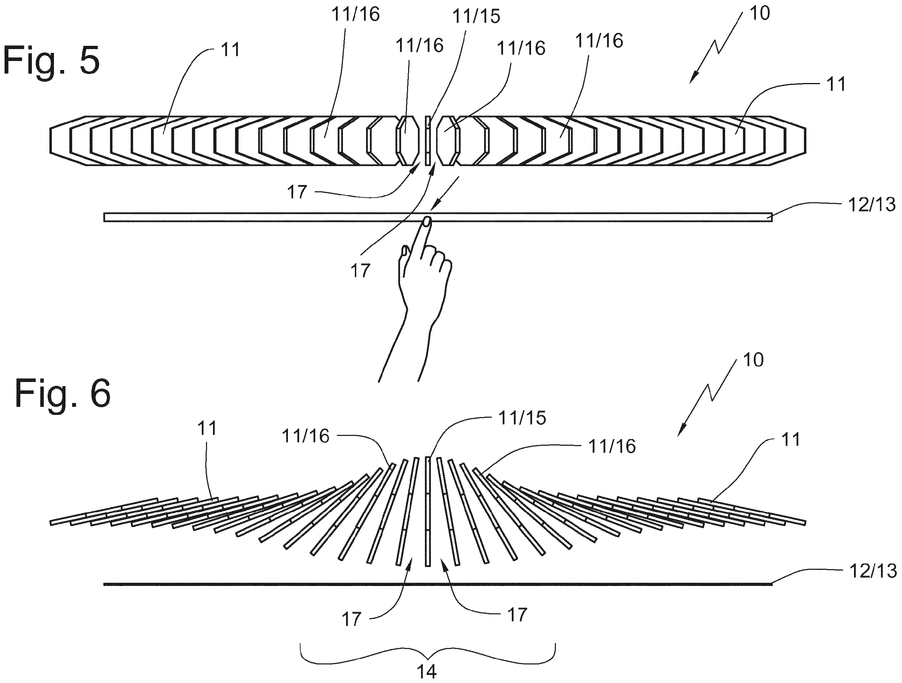

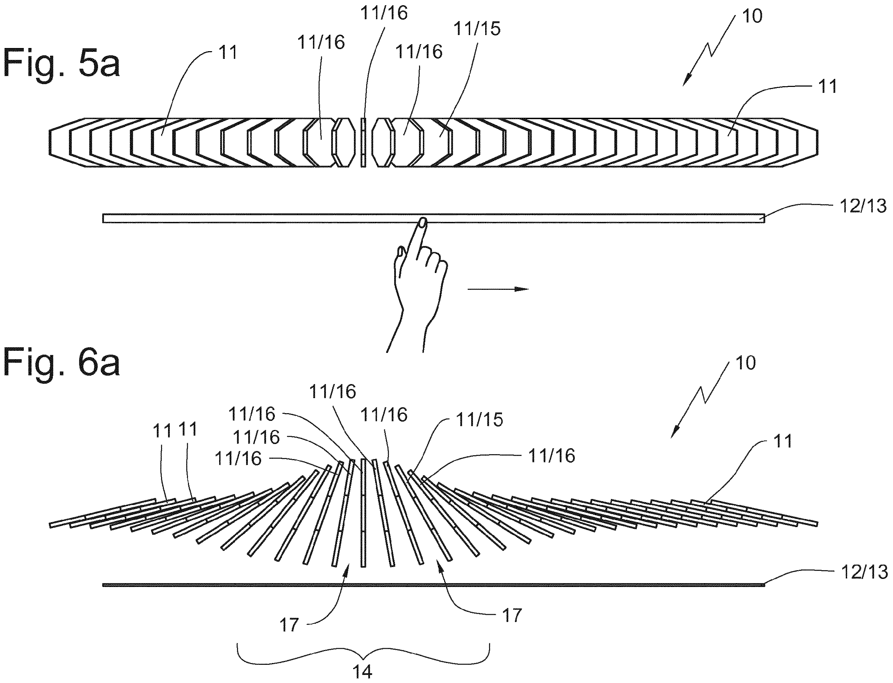

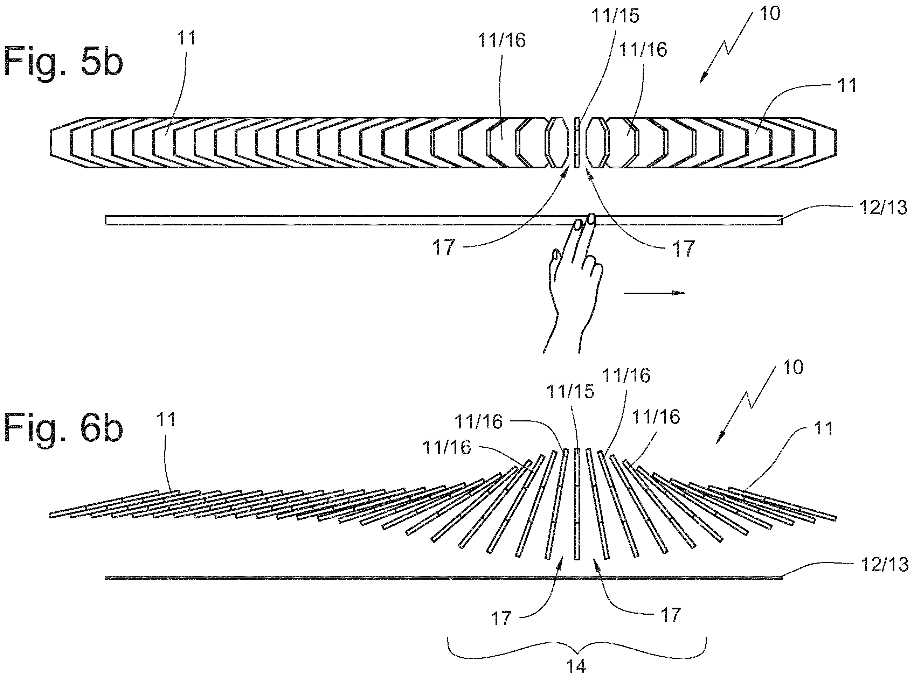

- Fig. 5a:: die Lamellenanordnung gemäß Fig. 5 mit verschwenkter Leitlamelle,
- Fig. 6a:: eine Aufsicht auf die Lamellenanordnung gemäß Fig. 5a,
- Fig. 5b:: die Lamellenanordnung gemäß Fig. 5 mit verschobenem Öffnungsbereich,
- Fig. 6b:: die Lamellenanordnung gemäß Fig. 5b in Aufsicht,

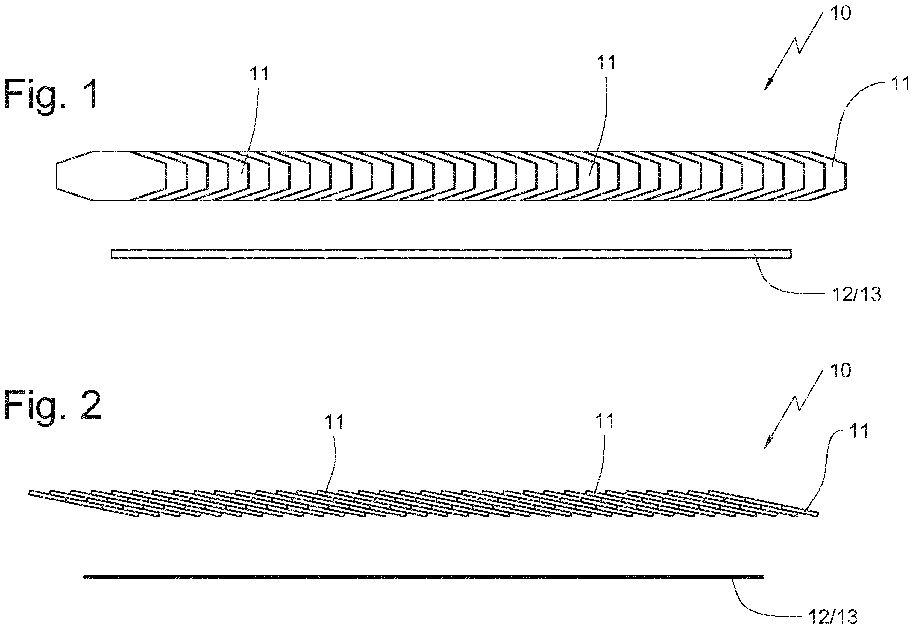

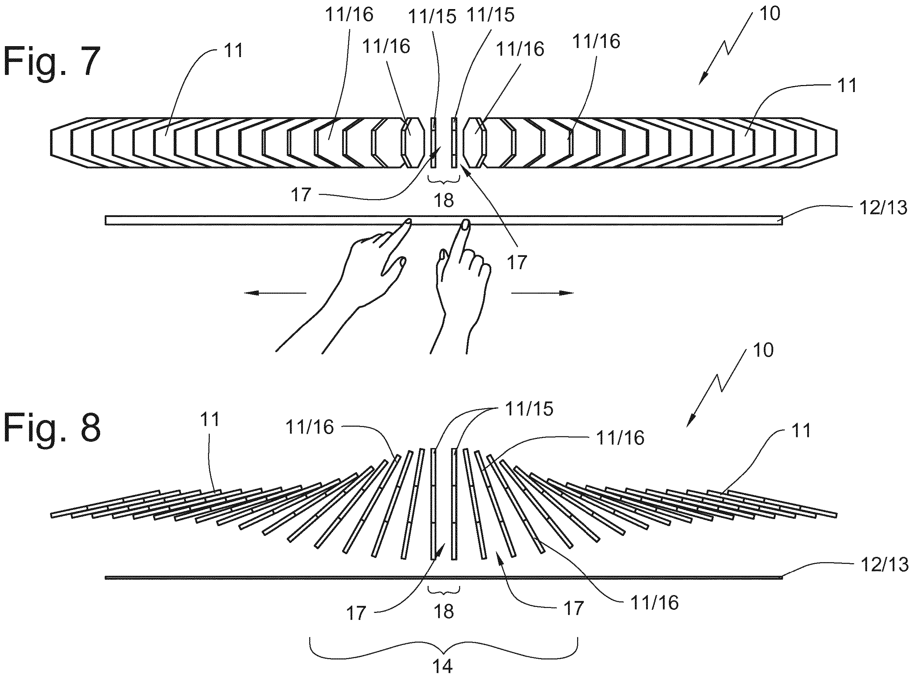

- Fig. 7:: eine Lamellenanordnung des Luftausströmers gemäß Fig. 1 mit einem durch zwei Leitlamellen gebildeten Leitlamellenbündel,
- Fig. 8:: eine Aufsicht auf die Lamellenanordnung gemäß Fig. 7,

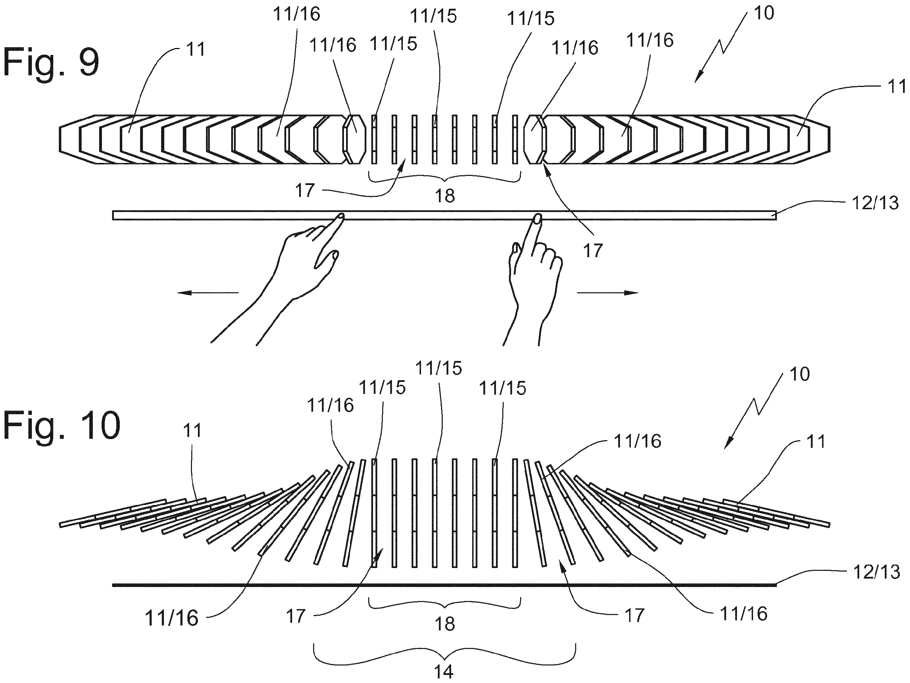

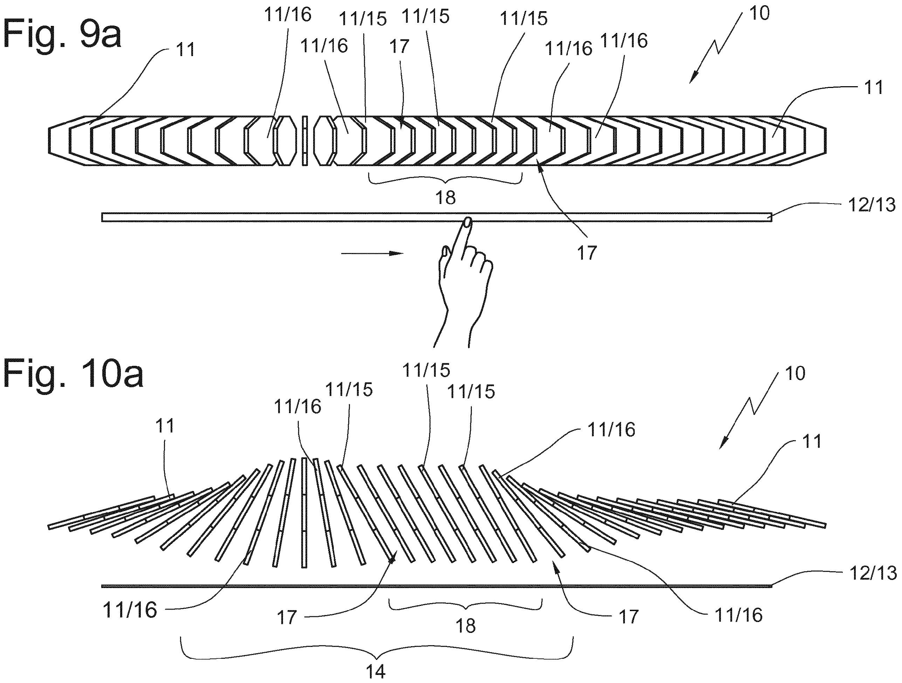

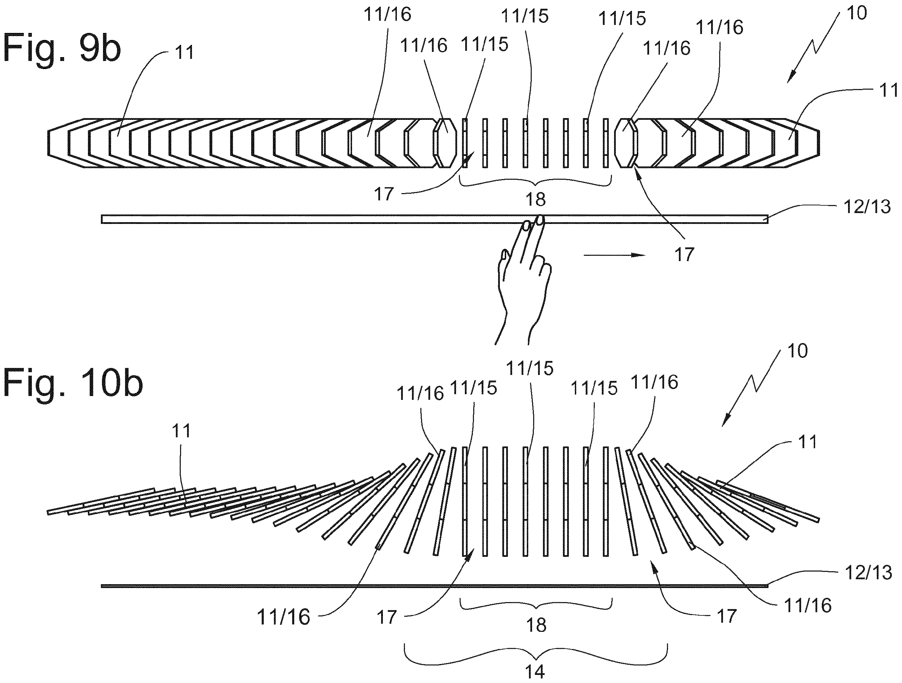

- Fig. 9:: die Lamellenanordnung gemäß Fig. 7 mit einem aus 8 Leitlamellen bestehenden Leitlamellenbündel,
- Fig. 10:: eine Aufsicht auf die Lamellenanordnung gemäß Fig. 9,
- Fig. 9a:: die Lamellenanordnung gemäß Fig. 9 mit verschwenktem Leitlamellenbündel,
- Fig. 10a:: eine Aufsicht auf die Lamellenanordnung gemäß Fig. 9a,
- Fig. 9b:: die Lamellenanordnung gemäß Fig. 9 mit seitlich verschobenem Öffnungsbereich,
- Fig. 10b:: eine Aufsicht auf die Lamellenanordnung gemäß Fig. 9b,

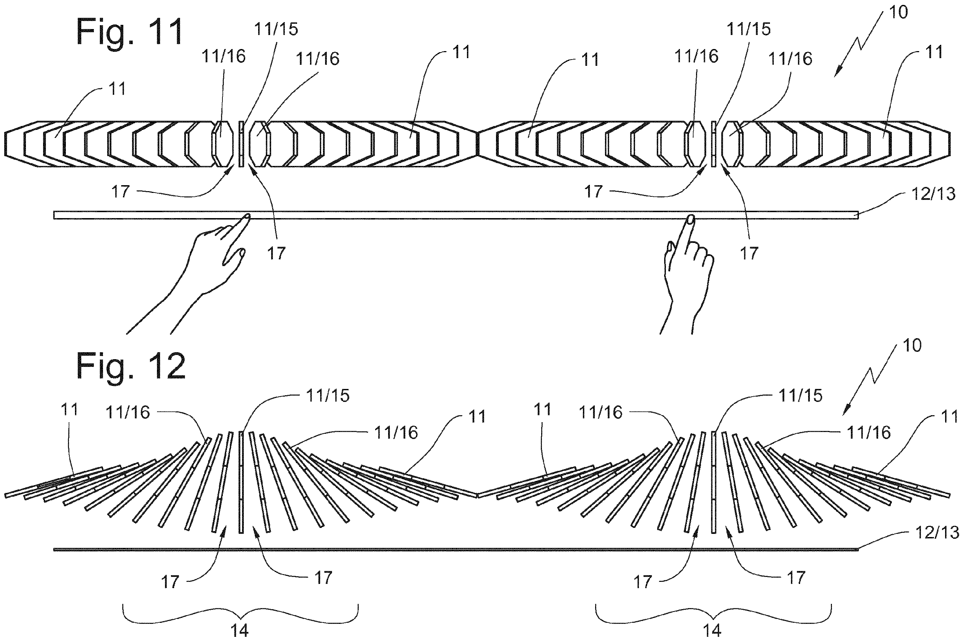

- Fig. 11:: die Lamellenanordnung eines Luftausströmers gemäß Fig. 1 mit zwei durch mehrere Lamellen voneinander beabstandeten Leitlamellen, welche zwei voneinander beabstandete Öffnungsbereiche bilden.

In den Figuren ist die Lamellenanordnung eines Luftausströmers insgesamt mit der Bezugsziffer 10 versehen.

Die Lamellenanordnung 10 umfasst eine Vielzahl von Einzellamellen 11, wobei jede Einzellamelle 11 um eine in den Figuren nicht dargestellte Vertikalachse schwenkbar ist. In Fig. 1 ist neben der Lamellenanordnung 10 mit ihren Einzellamellen 11 ein Bedienelement 12 gezeigt, welches sich parallel zur Lamellenanordnung 10 über eine erhebliche Breite der Lamellenanordnung 10 erstreckt. Die tatsächliche, parallel zur Lamellenanordnung 10 gemessene Länge des Bedienelements 12 kann von der Darstellung abweichen. Es ist auch denkbar, mehrere, einzelne Bedienelemente 12 vorzusehen, die sich lediglich über einen Teilabschnitt der Lamellenanordnung 10 erstrecken. Bei einer bevorzugten Ausführungsform der Erfindung ist das Bedienelement 12 als berührungssensitive Fläche 13 ausgebildet.

Die Figuren 1 und 2 sind gemeinsam zu betrachten. In Fig. 1 sind die Einzellamellen 11 der Lamellenanordnung 10 hinsichtlich der Papierebene nach rechts verschwenkt und bilden eine Geschlossenposition, in dem - wie in Fig. 2 ersichtlich ist - die Einzellamellen 11 bis zur gegenseitigen Anlage aneinander verschwenkt wurden. In dieser Geschlossenstellung der Einzellamellen 11 kommt es zu einer ausströmspaltfreien Anlage aneinander, so dass ein zwischen den Lamellen 11 hindurchfließender Luftstrom blockiert ist.

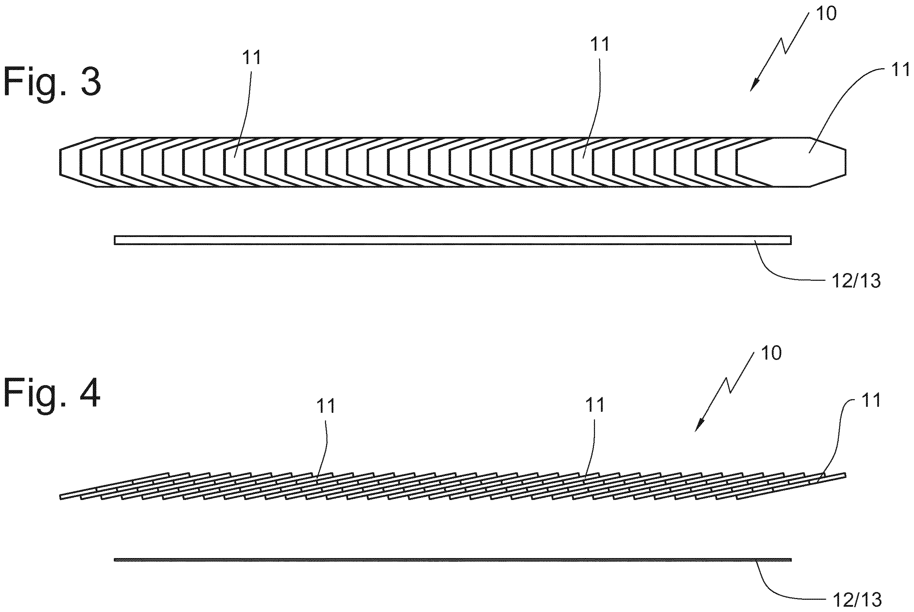

Die Figuren 3 und 4 zeigen eine gegenüber den Figuren 1 und 2 abweichend ausgerichtete Lamellenanordnung 10. Auch hier ist eine Geschlossenstellung realisiert. Jedoch sind die Lamellen 11 hier hinsichtlich der Papierebene nach links verschwenkt, bis sie ausströmspaltfrei aneinander anliegen und ein Luftdurchtritt zwischen den Einzellamellen 11 blockiert ist.

Die Funktion des erfindungsgemäßen Luftausströmers, insbesondere die Stellung der Einzellamellen 11 der Lamellenanordnung 10 und die unterschiedliche Ausgestaltung von Öffnungsbereichen 14, welche den Durchtritt eines Luftstroms zumindest partiell ermöglichen, werden anhand der Figuren 5 bis 12 dargestellt. Das Erreichen der unterschiedlichen Lamellenstellungen ist unabhängig davon, ob eine Geschlossenstellung gemäß den Figuren 1 und 2 oder eine Geschlossenstellung gemäß den Figuren 3 und 4 Ausgangspunkt für die geänderte Stellung von Einzellamellen 11 ist.

In Fig. 5 ist wieder eine Frontalansicht und in Fig. 6 die zugehörige Aufsicht auf die Lamellenanordnung 10 zu sehen. Durch eine entsprechende Nutzung des Bedienelementes 12, hier durch Berührung der berührungssensitiven Fläche 13 mit einem Finger an einem beliebigen Punkt, wird die der Berührung nächstgelegene Einzellamelle 11 als sogenannte Leitlamelle 15 ausgewählt. Diese Leitlamelle 15 stellt sich auf, wobei die rechts und links der Leitlamelle 15 befindlichen, sogenannten Folgelamellen 16 - der Öffnungsbewegung der Leitlamelle 15 folgend - ebenfalls eine Aufstellung erfahren. Die Stellungsänderung der Leitlamelle 15 sowie der Folgelamellen 16 erfolgt durch ein entsprechendes Verschwenken um die hier nicht dargestellte Schwenkachse. Hierbei bilden sich zwischen einer vorgegebenen Anzahl von Lamellen 15/16 Ausströmspalten 17, durch welche Belüftungsluft von einem hinter der Lamellenanordnung 10 gelegenen Ort in einen vor der Lamellenanordnung 10 gelegenen Raum eintreten kann.

Wie aus den Figuren 5 und 6 ersichtlich ist, bildet lediglich eine überschaubare Gruppe von Einzellamellen 11 in Form einer Leitlamelle 15 mit benachbarten Folgelamellen 16 den Öffnungsbereich 14 aus. Beidseitig schließt sich ein Abschnitt mit Einzellamellen 11 in Geschlossenstellung an, welche ausströmspaltfrei aneinander anliegen und in den geschlossenen Bereichen - im Gegensatz zum Öffnungsbereich 14 - einen Luftdurchtritt verhindern. Hierdurch wird der zur Belüftung dienende Luftstrom auf einen bestimmten Bereich des vor der Lamellenanordnung 10 gelegenen Raumes beschränkt.

In den Figuren 5 und 6 nehmen die Folgelamellen 16 unterschiedliche Winkel zur Leitlamelle 15 ein. Mit zunehmender Entfernung von der Leitlamelle 15 ist der zwischen dieser und der jeweiligen Folgelamelle 16 eingeschlossene Winkel größer. Dabei kann der Winkel zwischen den einzelnen Lamellen 15/16 jeweils konstant sein. Der Winkel zwischen den einzelnen Lamellen 15/16 kann jedoch auch variieren. Im vorliegenden Ausführungsbeispiel ist darüber hinaus zu sehen, dass beidseitig zur Leitlamelle 15 angeordnete Folgelamellen 16 einen jeweils entgegengesetzten Winkel einnehmen. Insgesamt hat diese Lamellenanordnung im Öffnungsbereich zur Folge, dass eine diffuse Luftströmung die Lamellenanordnung 10 verlässt, womit Zugluftempfindungen verringert oder vermieden werden.

Insbesondere aus der Aufsicht gemäß Fig. 6 bei einer vergleichenden Betrachtung mit den Fig. 1 und 2 bzw. 3 und 4 wird ersichtlich, dass ausgehend von einer vollständigen Geschlossenstellung der Lamellenanordnung 10 sich in diesem, wie auch in den anderen Ausführungsbeispielen, einer der zur gewählten Leitlamelle 15 benachbarten Einzellamellenabschnitte von seiner links- bzw. rechtsseitigen Anschlagstellung in die Gegenstellung zu verschwenken hat.

Die Figuren 5a und 6a zeigen nunmehr, wie es sich auf die Lamellenanordnung 10 auswirkt, wenn die in den Figuren 5 und 6 an zentraler Position angeordnete Leitlamelle 15 im Hinblick auf die Papierebene durch ein Verschwenken nach rechts bewegt wird. Das Verschwenken der Leitlamelle 15 nach rechts bewirkt, dass die rechtsseitigen Folgelamellen 16 bis zum Erreichen einer Geschlossenstellung verschwenkt werden, sich hinsichtlich der Papierebene links befindende Folgelamellen 16 verschwenken ebenfalls nach rechts, wobei in diesem Beispiel die Breite des Öffnungsbereiches 14 konstant bleibt. Demnach stellen sich rechtsseitig der Leitlamelle 15 angeordnete Einzellamellen 11 aus ihrer Geschlossenposition in eine geöffnete Position auf und nehmen somit den Platz von Folgelamellen 16 ein. Hierdurch wandert der Öffnungsbereich 14 geringfügig. Das in den Figuren 5a und 6a dargestellte Schwenken der Leitlamelle 15 nach rechts führt gegenüber der nicht verschwenkten Leitlamelle 15 gemäß Figuren 5 und 6 zu einer Wanderung des Öffnungsbereiches 14 nach links.

In einer abweichenden, nicht dargestellten Ausgestaltung der Schwenkmöglichkeit der Leitlamelle 15 ist es denkbar, dass sich die Anzahl der linksseitig und rechtsseitig befindenden und durch Auswahl der Leitlamelle 15 als Folgelamellen 16 definierten Einzellamellen 11 nicht ändert. Dann führt ein Verschwenken der Leitlamelle nach rechts dazu, dass die rechts der Leitlamelle 15 angeordneten Folgelamellen 16 eine Geschlossenstellung analog zu Fig. 6a einnehmen. Da sich linksseitig der Leitlamelle 15 jedoch nur die bereits zuvor als Folgelamelle 16 definierte Lamellenanzahl schwenkbewegt und keine der sich in Geschlossenstellung befindenden Einzellamellen 11 in Öffnungsrichtung bewegen, wird der Öffnungsbereich 14 in diesem Falle schmaler. Infolgedessen fehlt es auch an der zuvor beschriebenen Wanderbewegung des Öffnungsbereiches 14 nach links.

Auch die Darstellung der Lamellenanordnung 10 in den Figuren 5b und 6b ist in Bezug auf die bereits vorbeschriebenen Figuren 5 und 6 zu sehen.

Die Figuren 5b und 6b zeigen wiederum die Frontalansicht der Lamellenanordnung 10 sowie die Aufsicht auf die selbige. Hier wird illustriert, wie über das Bedienelement 12 bzw. die berührungssensitive Fläche 13 über eine alternative Bedienungsgestik (2 Finger statt einem Finger) der Öffnungsbereich 14 entlang der Längserstreckung der Lamellenanordnung 10 verschoben wird. Die Lamellenanzahl, welche den Öffnungsbereich definiert, ist gleichbleibend. Es findet jedoch während der Verschiebebewegung fortwährend ein Lamellenaustausch statt. Jede sich entgegen der Verschieberichtung schließenden Lamelle 16/11 wird von einer in Verschieberichtung vorn liegenden, sich öffnenden Lamelle 11/16 ersetzt.

Der wesentliche Unterschied zur (leichten) Verschiebung des Öffnungsbereiches 14 beim Verschwenken der Leitlamelle 15 gemäß Beschreibung zu den Figuren 5a und 6a besteht darin, dass von dem steten Lamellenaustausch auch die Leitlamelle 15 betroffen ist und somit der Öffnungsbereich 14 von einem Ende der Lamellenanordnung 10 zum anderen Ende der Lamellenanordnung 10 verschoben werden kann. Im Gegensatz dazu ist aufgrund der unveränderlich definierten Leitlamelle 15 in den Figuren 5a und 6a dort lediglich ein leichter Versatz des Öffnungsbereiches 14 entweder rechtsseitig oder linksseitig der Leitlamelle 15 möglich.

Die Erfindung ermöglicht es auch, über die berührungssensitive Fläche 13 bzw. ein oder mehrere Bedienelemente 12 mehrere Einzellamellen 11 gleichzeitig als Leitlamelle 15 festzulegen. In den Figuren 7 bis 10 erfolgt dies dadurch, dass zwei lediglich durch einen Ausströmspalt 17 beabstandete Lamellen 15/16 mit je einem Finger je einer Hand angewählt werden, so dass die zwei gewählten Leitlamellen 15 eine Parallelstellung zueinander annehmen. Über ein entsprechendes Bewegen der Finger in gegensätzliche Richtung können eine Vielzahl von Einzellamellen 11 als Leitlamellen 15 definiert werden, wie es in den Figuren 9 und 10 gezeigt ist. Auch hier nehmen alle Leitlamellen 15 zueinander eine Parallelstellung ein, sodass benachbarte, lediglich von einem Ausströmspalt 17 beabstandete Leitlamellen 15 ein Leitlamellenbündel 18 bilden. Entsprechend der Beschreibung zu den vorherigen Darstellungen befinden sich beidseitig eines jeden Leitlamellenbündels 18 wiederum Folgelamellen 16, welche der Öffnungsbewegung, also der jeweiligen Stellung der Leitlamellen 15 des Leitlamellenbündels 18, folgen. Durch die Auswahl mehrerer Leitlamellen 15 und deren Bündelung lässt sich in den Figuren 7 bis 10 der Öffnungsbereich 14 erweitern, sodass ein bestimmter, vor der Lamellenanordnung 10 gelegener Raum mit einer größeren Menge Belüftungsluft versorgt werden kann. Darüber hinaus führt die Parallelstellung der Leitlamellen 15 im Leitlamellenbündel 18 in dem vorgelagerten Bereich zu einer gerichteten Luftströmung.

Soll lediglich der Öffnungsbereich 14 erweitert werden, ohne dass eine gerichtete Luftströmung gewünscht ist, lässt sich insbesondere bei Verwendung einer berührungssensitiven Fläche über eine abweichende Bedienungsgeste eine Lamellenanordnung 10 vorstellen, welche mit ausschließlich einer Leitlamelle 15 auskommt, jedoch die Anzahl der seitlich angeordneten Folgelamellen 16 erhöht. Hierdurch wird der Öffnungsbereich 14 vergrößert, die von der Leitlamelle 15 jeweils abweichenden Winkelstellungen führen jedoch zu einer diffusen Luftströmung über den erweiterten Öffnungsbereich 14.

Analog zu den Figuren 5a und 6a sowie 5b und 6b sind die Figuren 9a und 10a sowie 9b und 10b zu sehen. In den Figuren 9a und 10a wird durch das Bedienelement 12 bzw. eine entsprechende Bediengeste auf der berührungssensitiven Fläche 13 das Leitlamellenbündel 18 nach rechts verschwenkt, wobei sich hier die Breite des Öffnungsbereiches 14 durch das Öffnen vorher geschlossener Einzellamellen 11 nicht verringert. Wie oben bereits beschrieben, besteht jedoch auch hier die in den Figuren nicht dargestellte Möglichkeit, dass durch das Verschwenken der Öffnungsbereich 14 verkleinert wird, indem eine zusätzliche Öffnungsbewegung vorher in Geschlossenstellung befindlicher Einzellamellen 11 unterbleibt.

Die Figuren 9b und 10b zeigen hingegen das Verschieben des Öffnungsbereiches 14 über die Längserstreckung der Lamellenanordnung 10, wobei entsprechend der Verschiebebewegung ein kontinuierlicher Lamellenaustausch stattfindet, insbesondere erfährt das Leitlamellenbündel 18 bei gleichbleibender Lamellenzahl einen Leitlamellenaustausch.

Die Figuren 11 und 12, wiederum Frontalansicht und Aufsicht auf eine Lamellenanordnung 10 zeigen eine weitere Variante der Erfindung mit mehr als einer definierten Leitlamelle 15. Hier sind zwei Leitlamellen 15 über das Bedienelement 12 bzw. die berührungssensitive Fläche 13 gewählt, welche jeweils beidseitig benachbart über Folgelamellen 16 verfügen, und zumindest durch diese Folgelamellen 16 voneinander beabstandet sind. Zusätzlich können zwischen beiden Leitlamellen 15 auch weitere Einzellamellen 11 in Geschlossenstellung befindlich sein. Auf diese Weise ist es möglich, hier zwei, im Allgemeinen jedoch mehrere, an unterschiedlichen Positionen über die Längserstreckung der Lamellenanordnung 10 hinweg verteilt angeordnete Öffnungsbereiche 14 zu definieren. Jeder dieser Öffnungsbereiche 14 kann nunmehr entsprechend den zu den Figuren 5 bis 10 dargestellten, sowie den lediglich beschriebenen Ausführungsbeispielen ausgestaltet sein. Es ist demnach also möglich, die Leitlamelle 16 unter Aufrechterhaltung der Breite des Öffnungsbereiches 14 genauso wie unter Verringerung der Breite des Öffnungsbereiches 14 zu verschwenken. Es ist möglich, jeden Öffnungsbereich 14 in den Figuren 11 und 12 unabhängig voneinander über die Längserstreckung der Lamellenanordnung 10 durch Verschieben zu verlagern. Es ist ebenso denkbar, einem oder beiden bzw. mehreren Öffnungsbereichen 14 zusätzliche Leitlamellen 15 in Form eines Leitlamellenbündels 18 zuzuweisen und so den jeweiligen Öffnungsbereich 14 zu erweitern. Genauso ist es möglich, den Öffnungsbereich 14 durch zusätzliche Folgelamellen 16 unter Beibehaltung einer diffusen Luftströmung zu erweitern.

Es ist vorgesehen, dass eine Eingabe des Bedieners neben der Verstellung der Lamellenanordnung 10 eine zusätzliche Rückkopplung auslöst, beispielweise durch optische oder haptische Signale. Diese Rückkopplung kann als Bestätigung der Eingabe oder Bestätigung der geänderten Lamellenanordnung 10 eine singuläre Rückkopplung sein. Es ist jedoch auch möglich, die Rückkopplung für den Zeitraum des Verstellvorgangs andauern zu lassen und somit den Verstellvorgang an sich zu signalisieren. Für die Rückkopplung kommen zunächst Signalelemente - gleich ob optisch oder haptisch - im Bereich des Bedienelementes in Frage. Es ist jedoch sinnvoll, den aktuellen Zustand der Lamellenanordnung 10 wenigstens optisch über eine separate Anzeige darzustellen oder über eine solche Anzeige abrufbar zu machen. Insbesondere ist vorgesehen, den Zustand der Lamellenanordnung 10 durch entsprechende Symbole oder naturalistische Darstellungen auf einem die Bedienung unterstützenden Bildschirm anzeigen zu können. Lediglich der Vollständigkeit halber sei darauf hingewiesen, dass die Erfindung anhand eines Luftausströmers dargestellt wurde, dessen Lamellenanordnung 10 lediglich vertikal gerichtete Lamellen 11 enthält. Ohne grundsätzliche Änderungen kann hier auch eine horizontale Lamellenausrichtung verwirklicht werden. Es ist auch denkbar, hier einen Luftausströmer mit einer Kombination von Horizontal- und Vertikallamellen zu konstruieren.

Der wesentliche Vorteil der Erfindung liegt darin, dass durch die Auswahl einer jeden beliebigen Einzellamelle 11 als Leitlamelle 15 der Öffnungsbereich 14 mit seinen Ausströmspalten 17 an jeder Position des Luftausströmers positionierbar ist, wobei angrenzende Bereiche geschlossen sein können. Insbesondere bei Luftausströmern mit erheblicher Breite oder Höhe ist dies von Vorteil. Darüber hinaus wurde gezeigt, dass mehrere Öffnungsbereiche 14 durch Anwahl mehrerer Leitlamellen 15 definiert werden können, die in ihrer Breite darüber hinaus variabel sind. Es wurde gezeigt, dass auch bei unterschiedlichen Öffnungsweiten der Öffnungsbereiche 14 sowohl gerichtete Luftströmungen wie auch diffuse Luftströmungen realisierbar sind. Dieses Bedienkonzept ist insbesondere bei Luftausströmern von Vorteil, welche sich quer über eine erhebliche oder sogar die gesamte Breite des Armaturenbrettes eines PKWs oder eines sonstigen Fahrzeugcockpits erstecken. Auch ist es denkbar, beispielsweise bei PKWs, einen Luftausströmer im Bereich der Dachkante, beginnend bei der A-Säule bis hin zum Heck, anzuordnen oder beispielsweise im Fahrzeugdach über dessen Breite auszubilden. Dies kann nicht nur den Komfort erhöhen. Auch in konstruktiver Hinsicht kann dies erhebliche Vorteile haben, da weniger Zuleitungen zu entsprechend größeren, aber variabel nutzbaren Luftausströmern erforderlich sind, wohingegen kleinere Einzelluftausströmer in der Regel jeweils eine eigene Luftzuführung aufweisen müssen.

### Bezugszeichenliste

- 10: Lamellenanordnung
- 11: Einzellamellen
- 12: Bedienelement
- 13: berührungssensitive Fläche
- 14: Öffnungsbereich
- 15: Leitlamelle
- 16: Folgelamelle
- 17: Ausströmspalt
- 18: Leitlamellenbündel

## Patentansprüche

1. Luftausströmer für Fahrzeuginnenräume
- mit einer Leitlamelle (15) und mit Folgelamellen (16), die um jeweils eine Achse schwenkbar sind, wobei Folgelamellen (16) der Leitlamelle (15) in ihrer Öffnungsbewegung folgen und unterschiedliche Winkel zur Leitlamelle (15) einnehmen können, um eine diffuse Luftströmung zu erzeugen,
- mit einem Öffnungsbereich (14), welcher von einer Anzahl von Lamellen (11) mit zwischenliegenden Ausströmspalten (17) definiert ist, wobei durch die Ausströmspalten (17) Luft in das Fahrzeuginnere gelangt,
- mit mindestens einem Bedienelement (12), mittels dessen die Lamellen (11) in ihrer Ausrichtung veränderbar sind,
- eine beliebige Lamelle (11) als Leitlamelle (15) wählbar ist, der die Folgelamellen (16) in ihrer Öffnungsbewegung folgen,
**dadurch gekennzeichnet, dass**
- die Ausrichtung der beidseitig zur Leitlamelle (15) benachbart angeordneten Folgelamellen (16) entgegengesetzt ist, wobei mit zunehmend entfernter Nachbarschaft ein größerer Winkel zwischen der Leitlamelle (15) und jeweiliger Folgelamelle (16) eingeschlossen ist, bis benachbarte Folgelamellen (16) aneinander anliegen,
- aneinander anliegende Folgelamellen (16) einen ausströmspaltfreien Schließbereich definieren.

2. Luftausströmer nach Anspruch 1, **dadurch gekennzeichnet, dass** mittels des mindestens einen Bedienelementes (12) der Öffnungsbereich (14) über die Breite des Luftausströmers verschiebbar ist, wobei der Öffnungsbereich (14) bei gleichbleibender Lamellenzahl einen entsprechenden Lamellenaustausch erfährt.

3. Luftausströmer nach Anspruch 1, **dadurch gekennzeichnet, dass** mehrere Lamellen (11) als Leitlamelle (15) wählbar sind.

4. Luftausströmer nach Anspruch 3, **dadurch gekennzeichnet, dass** die gewählten Leitlamellen (15) nebeneinander angeordnet sind und zwei benachbarte Leitlamellen (15) lediglich von einem Ausströmspalt (17) beabstandet sind.

5. Luftausströmer nach Anspruch 4, **dadurch gekennzeichnet, dass** nebeneinander angeordnete Leitlamellen (15) ein Leitlamellenbündel (18) bilden, wobei die Lamellen des Leitlamellenbündels (18) zueinander parallel ausgerichtet sind.

6. Luftausströmer nach Anspruch 5, **dadurch gekennzeichnet, dass** das Leitlamellenbündel (18) einen Ausströmbereich innerhalb des Öffnungsbereiches (14) definiert, aus welchem die Luft gerichtet in den Innenraum strömt.

7. Luftausströmer nach Anspruch 6, **dadurch gekennzeichnet, dass** mittels des mindestens einen Bedienelementes (12) der Öffnungsbereich (14) über die Breite des Luftausströmers verschiebbar ist, wobei das Leitlamellenbündel (18) bei gleichbleibender Lamellenzahl einen entsprechenden Leitlamellenaustausch erfährt.

8. Luftausströmer nach Anspruch 3, **dadurch gekennzeichnet, dass** jede gewählte Leitlamelle (15) mit benachbarten Folgelamellen (16) einen Öffnungsbereich (14) zur Verfügung stellt.

9. Luftausströmer nach Anspruch 8, **dadurch gekennzeichnet, dass** jeder Öffnungsbereich (14) mittels des mindestens einen Bedienelementes (12) verschiebbar ist.

10. Luftausströmer nach einem der vorhergehenden Ansprüche, **dadurch gekennzeichnet, dass** sich das mindestens eine Bedienelement (12) über die Breite des Luftausströmers erstreckt.

11. Luftausströmer nach Anspruch 10, **dadurch gekennzeichnet, dass** das mindestens eine Bedienelement (12) eine berührungssensitive Fläche (13) ist.

## Claims

1. Air vent for vehicle interiors
- with a primary lamella (15) and with secondary lamellae (16) which are each pivotable about an axis, wherein secondary lamellae (16) follow the primary lamella (15) in its opening movement and can adopt different angles to the primary lamella (15) in order to generate a diffuse air flow,
- with an open region (14) which is defined by a number of lamellae (11) with intermediate outflow gaps (17), wherein air enters into the vehicle interior through the outflow gaps (17),
- with at least one actuation element (12) by means of which the alignment of the lamellae (11) is changeable,
- any desired lamella (11) can be selected as the primary lamella (15), which the secondary lamellae (16) follow in their opening movement,
**characterised in that**
- the secondary lamellae (16) arranged on both sides adjacent to the primary lamella (15) are aligned opposite one another, wherein a larger angle is enclosed between the primary lamella (15) and respective secondary lamella (16) with increasing distance, until adjacent secondary lamellae (16) contact one another,
- secondary lamellae (16) contacting one another define a closed region without an outflow gap.

2. Air vent according to claim 1, **characterised in that** by means of the at least one actuation element (12) the open region (14) is displaceable over the width of the air vent, wherein the open region (14) undergoes a corresponding lamella exchange for an identical number of lamellae.

3. Air vent according to claim 1, **characterised in that** a plurality of lamellae (11) can be selected as the primary lamella (15).

4. Air vent according to claim 3, **characterised in that** the selected primary lamellae (15) are arranged next to one another and two adjacent primary lamellae (15) are spaced apart only by an outflow gap (17).

5. Air vent according to claim 4, **characterised in that** primary lamellae (15) contacting one another form a primary lamella bundle (18), wherein the lamellae of the primary lamella bundle (18) are aligned parallel to one another.

6. Air vent according to claim 5, **characterised in that** the primary lamella bundle (18) defines an outflow region inside the open region (14), from which the air flows directed into the interior.

7. Air vent according to claim 6, **characterised in that** by means of the at least one actuation element (12) the open region (14) is displaceable over the width of the air vent, wherein the primary lamella bundle (18) undergoes a corresponding primary lamella exchange for an identical number of lamellae.

8. Air vent according to claim 3, **characterised in that** each selected primary lamella (15) with adjacent secondary lamellae (16) provides an open region (14).

9. Air vent according to claim 8, **characterised in that** each open region (14) is displaceable by means of the at least one actuation element (12).

10. Air vent according to any one of the preceding claims, **characterised in that** the at least one actuation element (12) extends over the width of the air vent.

11. Air vent according to claim 10, **characterised in that** the at least one actuation element (12) is a touch-sensitive surface (13).

## Revendications

1. Diffuseur d'air pour habitacles de véhicules
- avec une lamelle de tête (15) et des lamelles suiveuses (16) qui peuvent pivoter chacune autour d'un axe, les lamelles suiveuses (16) suivant la lamelle de tête (15) dans son mouvement d'ouverture et pouvant adopter différents angles par rapport à la lamelle de tête (15) pour générer un flux d'air diffus,
- avec une plage d'ouverture (14) qui est définie par un certain nombre de lamelles (11) avec des fentes de diffusion intermédiaires (17), de l'air parvenant dans l'habitacle de véhicule à travers les fentes de diffusion (17),
- avec au moins un élément de commande (12) au moyen duquel les lamelles (11) peuvent changer d'orientation,
- une lamelle (11) quelconque pouvant être choisie comme lamelle de tête (15) que les lamelles suiveuses (16) suivent dans son mouvement d'ouverture,
**caractérisé en ce que**
- l'orientation des lamelles suiveuses (16) voisines disposées de part et d'autre de la lamelle de tête (15) est inversée, l'angle entre la lamelle de tête (15) et chaque lamelle suiveuse (16) augmentant avec la distance qui les sépare jusqu'à ce que les lamelles suiveuses (16) voisines soient disposées l'une contre l'autre et que
- les lamelles suiveuses (16) disposées l'une contre l'autre définissent une zone de fermeture sans fente de diffusion.

2. Diffuseur d'air selon la revendication 1, **caractérisé en ce que** la plage d'ouverture (14) peut se déplacer sur la largeur du diffuseur d'air au moyen de l'au moins un élément de commande (12), la plage d'ouverture (14) subissant un échange de lamelles correspondant sans que le nombre de lamelles change.

3. Diffuseur d'air selon la revendication 1, **caractérisé en ce que** plusieurs lamelles (11) peuvent être choisies comme lamelle de tête (15).

4. Diffuseur d'air selon la revendication 3, **caractérisé en ce que** les lamelles de tête (15) choisies sont disposées les unes à côté des autres et que deux lamelles de tête (15) adjacentes ne sont séparées que par une fente de diffusion (17).

5. Diffuseur d'air selon la revendication 4, **caractérisé en ce que** les lamelles de tête (15) disposées les unes à côté des autres forment un faisceau de lamelles de tête (18), les lamelles du faisceau de lamelles de tête (18) étant orientées parallèlement entre elles.

6. Diffuseur d'air selon la revendication 5, **caractérisé en ce que** le faisceau de lamelles de tête (18) définit à l'intérieur de la plage d'ouverture (14) une plage de diffusion à partir de laquelle l'air est diffusé à l'intérieur de l'habitacle.

7. Diffuseur d'air selon la revendication 6, **caractérisé en ce que** la plage d'ouverture (14) peut se déplacer sur la largeur du diffuseur d'air au moyen de l'au moins un élément de commande (12), le faisceau de lamelles de tête (18) subissant un échange de lamelles de tête correspondant sans que le nombre de lamelles change.

8. Diffuseur d'air selon la revendication 3, **caractérisé en ce que** chaque lamelle de tête (15) choisie crée une plage d'ouverture (14) avec les lamelles suiveuses (16) adjacentes.

9. Diffuseur d'air selon la revendication 8, **caractérisé en ce que** chaque plage d'ouverture (14) peut se déplacer au moyen de l'au moins un élément de commande (12).

10. Diffuseur d'air selon une des revendications précédentes, **caractérisé en ce que** l'au moins un élément de commande (12) s'étend sur la largeur du diffuseur d'air.

11. Diffuseur d'air selon la revendication 10, **caractérisé en ce que** l'au moins un élément de commande (12) est une surface sensible au toucher.
